# FASCICULE DE BREVET EUROPEEN

(11) **EP 1 471 435 B1**
(45) Date de publication et mention de la délivrance du brevet: **25.06.2008**
(21) Numéro de dépôt: 04291024.0
(22) Date de dépôt: 16.04.2004
(51) Int. Cl.: G06F 15/167

(54) **Procédé d'exécution de tâches concurrentes par un sous-système géré par un processeur central**
Verfahren zur Ausführung von simultanen Tasks von einem von einem zentralen Prozessor verwalteten Subsystem
Method for executing concurrent tasks by a subsystem managed by a central processor

(30) Priorité: 24.04.2003 FR 0305064
(43) Date de publication de la demande: 27.10.2004
(73) Titulaire: STMicroelectronics S.A., 92120 Montrouge (FR)
(72) Inventeur: Robin, Frédéric, 38330 Saint Nazaire Les Eymes (FR); Artieri, Alain, 38400 Saint-Martin d'Hères (FR); Audrain, Stéphane, 38000 Grenoble (FR); Dumarest, Jacques, 38220 Notre Dame de Mésage (FR); Lefftz, Vincent, 38100 Grenoble (FR)
(74) Mandataire: Bentz, Jean-Paul

(56) Documents cités:
- WO-A-98/44745
- US-A- 5 818 967
- US-B1- 6 542 541

## Description

L'invention concerne le domaine du contrôle des tâches exécutées par un sous-système et plus particulièrement le contrôle par un processeur central d'un sous-système destiné au traitement temps réel de tâches.

De tels systèmes, comprenant un processeur central, fonctionnant éventuellement avec un système d'exploitation temps réel et un sous-système commandé par le processeur, sont en particulier utilisés dans des applications multimédia. Les sous-systèmes sont notamment utilisés pour effectuer des tâches de décompression audio ou vidéo sur des flux de données.

Il est notamment connu de commander un décodeur vidéo par un processeur central STi55 80. Le processeur transmet classiquement une sous tâche à exécuter par le décodeur. Un flux de sous tâches élémentaires constitue une tâche, par exemple, pour une tâche de décodage d'images successives. Le décodeur vidéo comprend en pratique un processeur de traitement de signaux numérique, aussi appelée DSP dans la littérature - pour digital signal processing en anglais.

Après la transmission de la sous-tâche, le sous-système doit répondre au processeur central, puis le processeur central soumet de nouvelles sous-tâches au sous-système.

Ce procédé présente des inconvénients. Le procédé exige notamment que le processeur présente un temps de réponse très réduit. Ceci implique d'utiliser un processeur performant et rend son intégration plus difficile. De plus, de nombreux systèmes d'exploitation de processeur ne garantissent pas un temps de réponse suffisamment court. Ces inconvénients sont particulièrement sensibles dans des applications en temps réel, notamment des applications multimédia. En effet, la restitution ou l'enregistrement de données multimédia sont parfois perturbés par le fonctionnement du processeur de façon notable pour l'utilisateur.

De plus, la gestion des réponses du sous-système par le processeur ralentit l'exécution d'autres tâches par le processeur. La mémoire du processeur central peut alors être insuffisante et provoquer l'effacement de données à traiter. Par ailleurs, la précision du moment d'exécution des sous-tâches par le sous-système est insuffisante.

Des fonctions multimédia telles que la pause, l'avance rapide, et similaire, sont délicates à gérer, la synchronisation de l'image et du son est également difficile à gérer.

Ces exigences impliquent également un développement, une intégration et une qualification des logiciels d'application assez complexe et fastidieuse.

La gestion temps réel est en outre délicate à intégrer dans le système d'exploitation du sous-système

Il existe donc un besoin pour un procédé d'exécution de tâche et pour un système selon l'invention qui résolvent un ou plusieurs de ces inconvénients.

Le brevet US 5,818,967 divulgue un moteur de décompression vidéo. Les tâches de calcul de décompression d'une vidéo comprimée au format MPEG sont partagées par un microprocesseur, un accélérateur graphique et un processeur dédié MPEG. Les "frames" d'images transmis aux co-processeurs spécialisés sont acheminés par un bus périphérique.

L'invention à ainsi pour objet un procédé de traitement de différentes tâches concurrentes par un sous-système géré par un processeur central, les tâches étant constituées de messages successifs incluant un premier message, des messages intermédiaires et un dernier message, chaque message intermédiaire comprenant au moins un paramètre de sous-tâche et un lien vers le message suivant indiquant l'instant de traitement du message suivant, le processeur central et le sous-système étant connectés à plusieurs compteurs associés à des tâches respectives et à une mémoire de stockage, le procédé comprenant les étapes de :
- pour chaque tâche,
   - une sous-étape d'écriture par le processeur central, comprenant:
      - inscription d'un message dans la mémoire ; puis
      - si le compteur est initialement libre d'accès, interdiction de l'accès au compteur associé pour le sous-système; puis
         - si le compteur a une valeur nulle, le processeur central inscrit dans le sous-système un lien indiquant l'instant de traitement du premier message par le sous-système;
         - sinon, inscription dans le sous-système du lien vers le message suivant, inclus dans le message inscrit dans la mémoire;
      - puis incrémentation du compteur par le processeur central par un nombre représentatif de la présence d'un message de ladite tâche dans la mémoire; puis
      - levée de l'interdiction d'accès au compteur;
   - une sous-étape de traitement par le sous-système, comprenant:
      - si le compteur est initialement libre d'accès, interdiction de l'accès au compteur associé pour le processeur central; puis
      - si le compteur a une valeur non nulle, le sous-système lit le lien vers le message suivant inscrit précédemment et décrémente le compteur associé; puis
      - levée de l'interdiction d'accès au compteur associé; puis
      - le sous-système traite les paramètres de sous-tâche du message suivant à l'instant indiqué dans le lien.

Selon une variante, le lien vers le message suivant indique également la longueur du message suivant.

Selon encore une variante, les messages d'une tâche sont disposés séquentiellement dans la mémoire.

Selon une autre variante, le lien vers le message suivant ne comprend pas l'adresse du message suivant dans la mémoire.

Selon encore une autre variante, le lien vers le message suivant indique également l'adresse du message suivant dans la mémoire.

On prévoit également que préalablement à l'étape d'inscription d'un message dans la mémoire, le processeur central consulte la liste des adresses disponibles dans la mémoire, détermine une adresse où stocker le message dans la mémoire et inscrit l'adresse du message dans le lien du message précédent.

Selon une variante, le lien vers le message suivant indique également le type du message suivant.

Selon une autre variante, au moins un lien d'un desdits messages indique un traitement immédiat du message suivant, et le procédé comprend en outre une étape de traitement immédiat du message suivant.

Selon encore une variante, au moins un lien vers le message suivant indique un traitement conditionné par un événement extérieur, et le procédé comprend en outre les étapes de :
- réception par le sous-système d'un signal représentatif d'un événement extérieur; puis
- traitement du message suivant par le sous-système.

Selon une autre variante, le signal est un signal de synchronisation vidéo.

Selon encore une autre variante, le lien vers le message suivant indique l'instant de traitement du message suivant par une durée relative séparant le traitement du message suivant et celui du message comprenant le lien.

On prévoit également que le premier message d'une tâche ne contient pas de paramètre de sous-tâche.

Selon une variante, le dernier message comprend un lien indiquant la fin de la tâche.

Selon une autre variante, l'indication de l'instant de traitement du message suivant dans le lien du dernier message comprend une valeur nulle.

Selon une autre variante, le sous-système effectue des tâches de traitement vidéo comprenant la gestion de capture d'images, la gestion d'affichage d'images et l'encodage/décodage d'images; lorsque plusieurs liens indiquent un même instant d'exécution pour plusieurs messages respectifs, le sous-système traite prioritairement les paramètres de sous-tâche d'un message de gestion de capture d'images, puis les paramètres de sous-tâche d'un message d'affichage d'images, puis les paramètres de sous-tâche d'un message d'encodage/décodage d'images.

Selon encore une variante, le sous-système et le processeur central réceptionnent un signal d'horloge commun et déterminent leur temps système respectif à partir de ce signal d'horloge.

Selon encore une autre variante, le traitement des paramètres d'un message est effectué lorsque le temps système du sous-système est égal à l'instant indiqué pour le traitement du message.

L'invention porte également sur un système électronique d'exécution de tâches concurrentes, comprenant :
- une mémoire de stockage;
- un processeur central, susceptible de générer et d'inscrire des messages successifs constituant plusieurs tâches concurrentes dans la mémoire de stockage, chaque tâche étant constituée d'un premier message, de plusieurs messages intermédiaires et d'un dernier message, chaque message intermédiaire inscrit comprenant au moins un paramètre de sous-tâche et un lien vers le message suivant,
- un sous-système susceptible de lire les messages inscrits dans la mémoire de stockage, et comprenant un organe de commande requérant le traitement d'un message à l'instant spécifié dans le lien du message précédant, et un organe de traitement traitant le message audit instant en réponse à la requête;
- plusieurs compteurs, chaque compteur étant associé à une des tâches, susceptible d'être incrémenté par le processeur central et susceptible d'être décrémenté par le sous-système;
- des sémaphores, chaque sémaphore autorisant un accès du processeur central à un compteur associé à ce sémaphore seulement en absence d'accès du sous-système audit compteur, et autorisant un accès du sous-système audit compteur associé seulement en absence d'accès du processeur central audit compteur.

Selon une variante, la mémoire comprend au moins plusieurs lignes de stockage parallèles de type FIFO, dont l'entrée est connectée au processeur central, et dont la sortie est connectée au sous-système.

Selon encore une variante, le système présente une horloge fournissant un même signal d'horloge au processeur central et au sous-système.

Selon une autre variante, le processeur central et le sous-système disposent chacun d'un organe de détermination d'un temps système en fonction des signaux d'horloge.

Selon encore une autre variante, le sous-système comprend un module temporel de comparaison du temps système et de l'instant d'exécution d'un message, susceptible de générer ladite requête en cas d'égalité entre le temps système et l'instant d'exécution.

On peut également prévoir que le sous-système présente une entrée de réception d'évènements extérieurs autres que des signaux d'horloge.

Selon une variante, le sous-système est susceptible de synchroniser le traitement d'au moins un message avec un événement extérieur reçu.

Selon encore une variante, le compteur comprend le nombre de messages d'une tâche stockés dans la mémoire.

L'invention sera mieux comprise à partir des figures annexées, fournies à titre d'exemple, et qui représentent:
- figure 1, une représentation schématique d'un système selon l'invention;
- figure 2, la structure simplifiée de trois paquets successifs appartenant à une même tâche selon l'invention. Le système 1 comprend un processeur central 2 et un sous-système 3;
- figure 3, une représentation schématique d'un sémaphore utilisé.

L'invention propose de traiter différentes tâches concurrentes constituées d'un premier message, de message intermédiaires et d'un dernier message. Les messages intermédiaires comprennent un paramètre de sous-tâche et un lien vers le message suivant, ce lien indique l'instant de traitement du message suivant. Un compteur est associé à chaque tâche. On utilise un sémaphore pour éviter des accès conflictuels au compteur, de la part du processeur central ou du sous-système. Le compteur permet également de discriminer si le message est un premier message, un message intermédiaire ou un dernier message.

Un tel système permet notamment de réduire, voire éliminer les envois d'informations du sous-système vers le processeur central pour gérer l'exécution des tâches. Ce système permet en outre de réduire les exigences de temps de réponse du processeur central. Ce système permet par ailleurs d'exécuter les sous-tâches d'une tâche à un instant déterminé. Ce système permet de plus au sous-système et au processeur central d'accéder à des données communes sans conflit. Le système permet encore de décharger la mémoire du processeur central.

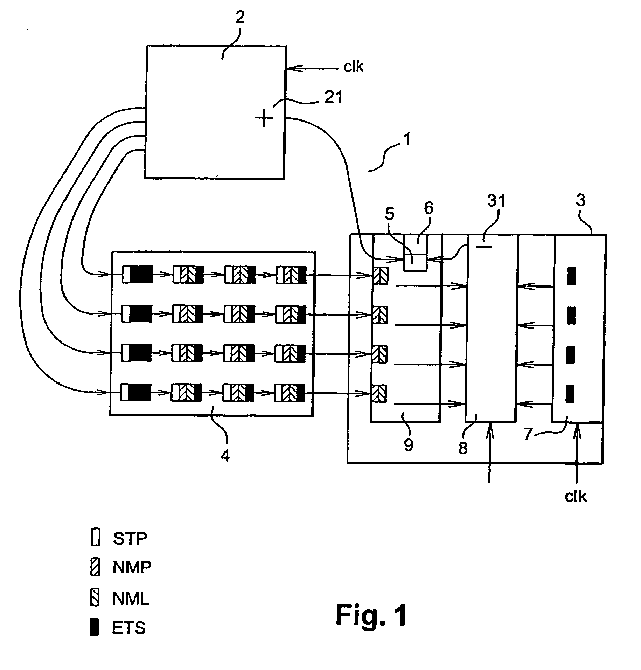

La figure 1 représente un mode de réalisation d'un système 1 mettant en oeuvre des procédés de l'invention. Le système 1 comprend un processeur central 2, un sous-système 3 de traitement de messages, et une mémoire 4. Le processeur central 2 présente un accès en écriture à la mémoire 4, tandis que le sous-système 3 présente un accès en lecture à la mémoire 4. Le système 1 présente en outre des compteurs 5, chacun associé à une tâche respective. Chaque compteur 5 est associé à un sémaphore 6 de gestion d'accès, gérant les accès en lecture et en écriture du processeur central 2 ou du sous-système 3. Un module temporel 7 commande l'exécution de sous-tâches par un module de traitement 8 du sous-système 3, à des instants déterminés. Le système 1 de ce mode de réalisation comprend également avantageusement un registre de stockage intermédiaire 9, connecté entre la mémoire 4 et le module de traitement 8.

L'homme de métier comprendra bien que le sous-système peut être réalisé de manière adéquate en intégrant ou non les différents éléments décrits ci-dessus. L'homme de métier adaptera bien entendu les dimensions des bus entre les différents éléments du système 1, afin de garantir des débits suffisants pour les applications visées.

Le fonctionnement général d'un système 1 selon l'invention est le suivant:

Le processeur central 2 génère les messages et détermine l'instant d'exécution des sous-tâches correspondantes par le sous-système 3. Cette gestion des instants de traitement permet au processeur central 2 de gérer aisément des fonctions multimédia telles que l'avance rapide, la pause, etc... dans des flux audiovisuels. La synchronisation de flux audio et vidéo est en outre plus aisée à gérer, notamment dans l'hypothèse ou un système gère les flux audio et où un autre système gère les flux vidéo. Des exemples de structure de messages seront détaillés ultérieurement.

Le processeur central effectue pour chaque sous-tâche une étape d'inscription de message dans la mémoire 4. Durant cette étape d'inscription, le processeur central 2 inscrit un message dans la mémoire 4 et on teste si le compteur 5 est libre d'accès, par l'intermédiaire du sémaphore associé. Si le compteur est libre d'accès, le processeur central 2 interdit l'accès au compteur 5 par le sous-système 3. Si le compteur n'est pas libre d'accès, le processeur central 2 renouvèle le test jusqu'à ce que le compteur 5 soit libre d'accès. Le processeur central 2 lit ensuite la valeur du compteur 5. Si le compteur 5 a une valeur nulle, le processeur central inscrit un lien indiquant l'instant de traitement du premier message dans le sous-système 3, par exemple dans le module temporel 7. Si le compteur 5 a une valeur non-nulle, le processeur central 2 inscrit dans le sous-système 3 un lien vers le message suivant, initialement inclus dans le message inscrit dans la mémoire. Le compteur est incrémenté par le processeur central 2, par un nombre représentatif de la présence d'un message de la tâche dans la mémoire 4. Le processeur central 2 dispose ainsi d'une sortie d'incrémentation 21. Le processeur central 2 lève ensuite l'interdiction d'accès au compteur 5.

Le sous-système 3 va ensuite traiter les paramètres des messages stockés dans la mémoire 4. Lors d'une étape de traitement d'un message ou des paramètres de sous-tâche, le sous-système 3 teste préalablement si le compteur 5 est libre d'accès. Si le compteur 5 est libre d'accès, le sous-système 3 interdit l'accès au compteur 5 par le processeur central 2. Si le compteur 5 a une valeur non-nulle, le sous-système 3 lit le lien vers le message en cours de traitement, lien contenu dans le message précédent. Le compteur 5 est alors décrémenté et l'interdiction d'accès au compteur 5 est alors levée. Le sous-système 3 dispose d'une sortie 31 permettant de décrémenter le compteur 5. Le sous-système 3 traite les paramètres de sous-tâche du message en cours à l'instant indiqué dans le lien du message précédent. L'instant de traitement d'un message est par exemple géré par le module temporel 7. Le module temporel 7 compare par exemple l'instant, indiqué dans le lien du message précédant, à l'instant en cours, par exemple obtenu à partir d'un temps système partagé avec le sous-système 3. Lorsque l'instant indiqué est égal à l'instant en cours, le module temporel 7 commande le traitement du message correspondant par le sous-système 3.

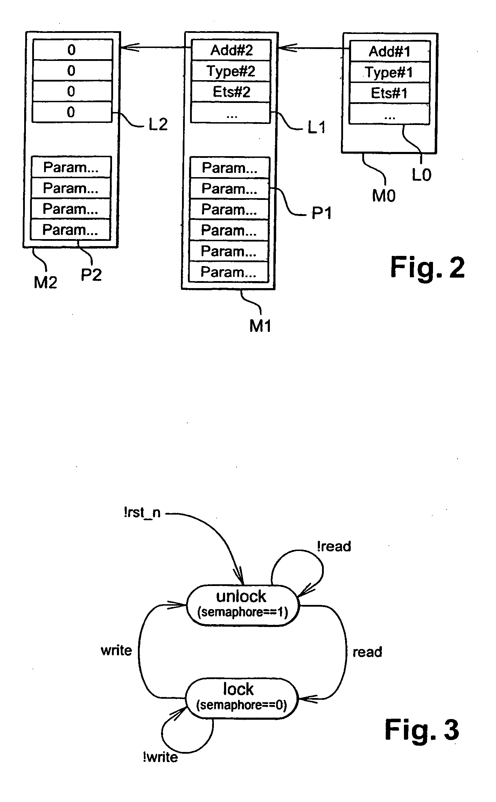

Les autorisations d'accès au compteur 5 sont ainsi gérées par le sémaphore 6. Un exemple de sémaphore à un bit est schématisé à la figure 3. Le sémaphore 6 représenté interdit l'accès à un élément autre que celui en cours d'accès lorsque le bit vaut 1, et autorise tout accès lorsque le bit vaut 0. Le sémaphore 6 vise à éviter que le processeur central 2 et le sous-système 3 n'accèdent en simultané au compteur 5. On évite ainsi des inscriptions erronées dans le compteur 5.

Il est à noter qu'on peut envisager plusieurs types de compteur 5. On peut notamment prévoir que le compteur 5 mémorise le nombre de sous-tâches ou de messages restant à traiter pour une tâche, ou encore que le compteur 5 ne présente qu'un état binaire, représentatif de la présence ou non d'un message de la tâche dans la mémoire 4. Si le compteur 5 mémorise le nombre de messages restant à traiter, le processeur central 2 peut consulter le compteur 5 pour savoir si une sous-tâche définie a été exécutée. Le compteur peut notamment servir à discriminer si le message est un premier message d'une tâche ou un message intermédiaire ou un dernier message. Le compteur permet également au processeur central 2 de réinitialiser ou effacer une tâche: il suffit pour cela que le processeur central 2 inscrive une valeur nulle dans le compteur 5.

La figure 2 représente les structures respectives de messages d'une tâche T comprenant trois messages M0 à M2. Ces messages ont été générés successivement par le processeur central: par "successivement", on entend que pour une tâche donnée, les messages ont été générés dans un ordre déterminé. Le processeur peut bien entendu générer des messages pour d'autres tâches, par exemple dans l'intervalle séparant la génération de M0 et M1. Le message M0 est le premier message de la tâche T, le message M1 est un message intermédiaire, et le message M2 est le dernier message de cette tâche.

Le message M0 représenté comprend uniquement le lien L0 vers le message M1. Ce message M0 ne comprend ainsi préférentiellement pas de paramètres de sous-tâches, car il n'a été précédé d'aucun message de la tâche T. Ainsi, l'instant d'exécution de paramètres éventuels de M0 n'aurait pas pu être défini dans un autre message de la tâche T. Le lien L0 comprend un pointeur vers l'adresse de M1 dans la mémoire 4, un indicateur du type du message M1, et un indicateur de l'instant d'exécution de M1. On peut également inclure dans le lien L0 un indicateur de la longueur du message M1, une requête en exécution immédiate du message M1 (qui implique le traitement de M1 par le sous-système, immédiatement), une requête d'exécution conditionnelle du message M1 (on peut notamment prévoir de surveiller des évènements extérieurs : on réceptionne un signal représentatif d'un événement extérieur indiqué dans la requête, et on traite alors le message M0. On peut notamment surveiller un signal de synchronisation vidéo.).

Le pointeur d'adresse est primordial dans les variantes où des messages successifs d'une tâche ne sont pas inscrits les uns à la suite des autres dans une mémoire FIFO.

L'indicateur de longueur permet d'utiliser des paramètres de sous-tâche de longueur variable.

L'indicateur de l'instant d'exécution contenu dans L0, spécifie l'instant d'exécution des paramètres P1 de M1, définis ultérieurement. L'indicateur de l'instant d'exécution du message suivant peut être mis en oeuvre de plusieurs façons. On peut soit utiliser un indicateur absolu indiquant un instant d'exécution absolu par rapport au temps système, soit un indicateur relatif définissant la durée séparant un message de son message suivant. L'indicateur relatif permet des modifications plus aisées de l'instant d'exécution d'un ensemble de sous-tâches car il suffit de modifier un indicateur pour modifier l'instant d'exécution des messages suivants. Ce type de lien est particulièrement avantageux pour gérer des fonctions multimédia telles que décrites précédemment.

L'instant peut être défini par une valeur numérique, dont l'incrément vaut une durée de base, par exemple la période d'un cycle d'horloge système. Le processeur central 2 et le sous-système 3 disposent de préférence d'un même signal d'horloge.

De façon générale, chaque premier message et chaque message intermédiaire peut inclure les informations de L0 décrites pour M0, concernant son message suivant.

Le message M1 présente un lien L1 vers le message suivant M2, de structure similaire à celle de L0. Le message M1 présente en outre une zone P1 contenant des paramètres, correspondant à des données de la tâche à traiter par le sous-système 3.

Le message M2 comprend également un lien L2 vers un message suivant, et une zone P2 comprenant des paramètres de sous-tâche. Le lien L2 et la zone P2 présentent globalement la même structure que, respectivement, L1 et P1.

Le message M2 comprend de préférence un lien L2 indiquant que M2 est le dernier message de la tâche. On réduit ainsi les besoins d'autres moyens de signalisation pour le processeur central 2. De préférence, on utilise des zones ou indicateurs inutilisés de L2, pour indiquer que M2 est le dernier message de la tâche T. On peut notamment donner une valeur nulle à un indicateur du lien L2 pour fournir cette information. On peut notamment prévoir d'inclure une valeur nulle comme indication de l'instant d'exécution du message suivant dans L2.

On peut par exemple prévoir un lien vers le message suivant présentant la structure suivante: un pointeur vers le message suivant d'une taille de 28 bits, un indicateur du type de message suivant d'une taille de 8 bits, et un indicateur d'instant d'exécution d'une taille de 32 bits.

On peut envisager plusieurs types de modes de stockage des messages ou des paramètres des messages.

Selon une première variante, représentée à la figure 1, à chaque tâche traitée par le processeur central 2, est associée une ligne de mémoire FIFO. Ainsi, le processeur central 2 inscrit les messages successifs d'une tâche donnée à l'entrée de la mémoire FIFO. Cette variante permet éventuellement de ne pas inscrire de pointeur d'adresse dans le lien d'un message, car les messages successifs sont disposés en mémoire les uns à la suite des autres, dans leur ordre de traitement par le sous-système 3. A chaque ligne de la mémoire FIFO 4, est associé un emplacement mémoire d'un registre 9. Une fois qu'un message en sortie de la mémoire FIFO est traité, son lien est stocké dans le sous-système 3. En l'occurrence, l'indicateur d'instant d'exécution du message suivant est stocké dans le module temporel, le pointeur vers le message suivant et l'indicateur de longueur du message suivant sont stockés dans le registre 9. Sur la figure, les termes suivants identifient des portions de messages: STP correspond à des paramètres de sous-tâche, NMP correspond à un pointeur vers le message suivant, NML correspond à un indicateur de longueur du message suivant et ETS correspond à un indicateur d'instant d'exécution du message suivant. Le message suivant est alors placé à la sortie de la ligne correspondante de la mémoire FIFO 4. Ce message peut être traité car le sous-système 3 dispose de toutes les informations

On remarquera que dans l'exemple, l'usage des pointeurs d'adresse NMP est facultatif car les messages d'une même tâche sont placés les uns à la suite des autres dans une ligne FIFO par le processeur central 2.

On peut également prévoir que le processeur central 2 transfère un premier message d'une tâche directement dans le registre 9. Globalement, le registre 9 peut être considéré comme formant un tout avec la mémoire 4.

Selon une deuxième variante, les messages ou paramètres des messages sont stockés dans une mémoire 4 quelconque, accessible en écriture par le processeur central, et accessible en lecture par le sous-système 3. On crée ainsi une liste chaînée de messages ou sous-tâches. Cette mémoire peut être de tout type, par exemple intégrée au sous-système ou fractionnée entre une mémoire du sous-système et une mémoire extérieure de surplus.

Un sous-système de gestion de vidéo peut notamment mettre en oeuvre les tâches suivantes : le décodage vidéo, l'affichage vidéo, la capture vidéo, l'encodage vidéo, le décodage et l'affichage vidéo ou la capture et l'encodage vidéo.

On utilisera un processeur central adapté pour déterminer les instants d'exécution des différents messages d'une tâche, et pour définir l'ordre d'exécution de messages appartenant à des tâches différentes. Cependant, il est envisageable que des exceptions se produisent : le processeur central peut notamment engendrer plusieurs messages présentant un lien contenant une même indication d'instant d'exécution, ou il est possible que des priorités doivent être modifiées du fait de perturbations sur une tâche. On peut alors définir des ordres de priorités d'exécution, que le sous-système 3 prendra en compte lors de ces exceptions. Le sous-système 3 peut notamment effectuer plusieurs tâches parmi les suivantes: des tâches de traitement vidéo (comprenant la gestion de capture d'images), de gestion d'affichage d'images et d'encodage/décodage d'images. Le sous-système traite alors, par ordre de priorité décroissant: les paramètres de sous-tâche d'un message de gestion de capture d'images, les paramètres de sous-tâche d'un message d'affichage d'images, puis les paramètres de sous-tâche d'un message d'encodage/décodage d'images.

L'invention n'est bien entendu pas limitée aux exemples et modes de réalisation décrits et représentés, mais est susceptible de nombreuses variantes accessibles à l'homme de l'art. Ainsi, bien que le système ait été représenté schématiquement par des blocs indépendants, on peut prévoir en pratique d'intégrer le processeur central, le sous-système et la mémoire, ou simplement d'intégrer le sous-sytème et la mémoire. Par ailleurs, bien qu'on ait décrit l'utilisation d'un signal d'horloge commun pour déterminer un temps système dans le processeur central et dans le sous-système, on peut également envisager de fournir un temps absolu commun au processeur central et au sous-système.

## Revendications

1. Procédé de traitement de différentes tâches concurrentes par un sous-système (3) géré par un processeur central (2), les tâches étant constituées de messages successifs incluant un premier message (M0), des messages intermédiaires (M1) et un dernier message (M2), chaque message intermédiaire comprenant au moins un paramètre de sous-tâche et un lien vers le message suivant indiquant l'instant de traitement du message suivant, le processeur central (2) et le sous-système (3) étant connectés à plusieurs compteurs associés à des tâches respectives et à une mémoire de stockage (4), le procédé comprenant les étapes de :
- pour chaque tâche,
- une sous-étape d'écriture par le processeur central (2), comprenant:
- inscription d'un message dans la mémoire (4); puis
- si le compteur (5) est initialement libre d'accès, interdiction de l'accès au compteur associé pour le sous-système; puis
- si le compteur a une valeur nulle, le processeur central inscrit dans le sous-système un lien indiquant l'instant de traitement du premier message par le sous-système;
- sinon, inscription dans le sous-système du lien vers le message suivant, inclus dans le message inscrit dans la mémoire;
- puis incrémentation du compteur (5) par le processeur central par un nombre représentatif de la présence d'un message de ladite tâche dans la mémoire; puis
- levée de l'interdiction d'accès au compteur;
- une sous-étape de traitement par le sous-système, comprenant:
- si le compteur est initialement libre d'accès, interdiction de l'accès au compteur associé pour le processeur central; puis
- si le compteur a une valeur non nulle, le sous-système lit le lien vers le message suivant inscrit précédemment et décrémente le compteur associé; puis
- levée de l'interdiction d'accès au compteur associé; puis
- le sous-système traite les paramètres de sous-tâche du message suivant à l'instant indiqué dans le lien.

2. Procédé selon la revendication 1, **caractérisé en ce que** le lien vers le message suivant indique également la longueur du message suivant.

3. Procédé selon la revendication 1 ou 2, **caractérisé en ce que** les messages d'une tâche sont disposés séquentiellement dans la mémoire (4).

4. Procédé selon la revendication 3, **caractérisé en ce que** le lien vers le message suivant ne comprend pas l'adresse du message suivant dans la mémoire.

5. Procédé selon l'une quelconque des revendications 1 à 3, **caractérisé en ce que** le lien vers le message suivant indique également l'adresse du message suivant dans la mémoire (4).

6. Procédé selon la revendication 5, **caractérisé en ce que** préalablement à l'étape d'inscription d'un message dans la mémoire (4), le processeur central (2) consulte la liste des adresses disponibles dans la mémoire, détermine une adresse où stocker le message dans la mémoire et inscrit l'adresse du message dans le lien du message précédent.

7. Procédé selon l'une quelconque des revendications précédentes, **caractérisé en ce que** le lien vers le message suivant indique également le type du message suivant.

8. Procédé selon la revendication 7, **caractérisé en ce qu'**au moins un lien d'un desdits messages indique un traitement immédiat du message suivant, et **en ce que** le procédé comprend en outre une étape de traitement immédiat du message suivant.

9. Procédé selon la revendication 8, **caractérisé en ce qu'**au moins un lien vers le message suivant indique un traitement conditionné par un événement extérieur, et **en ce que** le procédé comprend en outre les étapes de :
- réception par le sous-système d'un signal représentatif d'un événement extérieur; puis
- traitement du message suivant par le sous-système.

10. Procédé selon la revendication 9, **caractérisé en ce que** le signal est un signal de synchronisation vidéo.

11. Procédé selon l'une quelconque des revendications précédentes, **caractérisé en ce que** le lien vers le message suivant indique l'instant de traitement du message suivant par une durée relative séparant le traitement du message suivant et celui du message comprenant le lien.

12. Procédé selon l'une quelconque des revendications précédentes, **caractérisé en ce que** le premier message d'une tâche ne contient pas de paramètre de sous-tâche.

13. Procédé selon la revendication précédente, **caractérisé en ce que** le dernier message comprend un lien indiquant la fin de la tâche.

14. Procédé selon la revendication 13, **caractérisé en ce que** l'indication de l'instant de traitement du message suivant dans le lien du dernier message comprend une valeur nulle.

15. Procédé selon l'une quelconque des revendications précédentes, **caractérisé en ce que**
- le sous-système (3) effectue des tâches de traitement vidéo comprenant la gestion de capture d'images, la gestion d'affichage d'images et l'encodage/décodage d'images;
- lorsque plusieurs liens indiquent un même instant d'exécution pour plusieurs messages respectifs, le sous-système traite prioritairement les paramètres de sous-tâche d'un message de gestion de capture d'images, puis les paramètres de sous-tâche d'un message d'affichage d'images, puis les paramètres de sous-tâche d'un message d'encodage/décodage d'images.

16. Procédé selon l'une quelconque des revendications précédentes, **caractérisé en ce que** le sous-système (3) et le processeur central (2) réceptionnent un signal d'horloge commun et déterminent leur temps système respectif à partir de ce signal d'horloge.

17. Procédé selon la revendication 16, **caractérisé en ce que** le traitement des paramètres d'un message est effectué lorsque le temps système du sous-système est égal à l'instant indiqué pour le traitement du message.

18. Système électronique d'exécution de tâches concurrentes (1), comprenant :
- une mémoire de stockage (4);
- un processeur central (2), susceptible de générer et d'inscrire des messages (MO-M2) successifs constituant plusieurs tâches concurrentes dans la mémoire de stockage, chaque tâche étant constituée d'un premier message (M0) de plusieurs messages intermédiaires (M1) et d'un dernier message (M2), chaque message intermédiaire inscrit comprenant au moins un paramètre de sous-tâche (P1) et un lien vers le message suivant (L1),
- un sous-système (3) susceptible de lire les messages inscrits dans la mémoire de stockage, et comprenant un organe de commande requérant le traitement d'un message à l'instant spécifié dans le lien du message précédant, et un organe de traitement traitant le message audit instant en réponse à la requête;
- plusieurs compteurs (5), chaque compteur étant associé à une des tâches, susceptible d'être incrémenté par le processeur central (2) et susceptible d'être décrémenté par le sous-système (3);
- des sémaphores (6), chaque sémaphore autorisant un accès du processeur central à un compteur associé à ce sémaphore seulement en absence d'accès du sous-système audit compteur, et autorisant un accès du sous-système audit compteur associé seulement en absence d'accès du processeur central audit compteur.

19. Système selon la revendication 18, **caractérisé en ce que** la mémoire comprend au moins plusieurs lignes de stockage parallèles de type FIFO, dont l'entrée est connectée au processeur central (2), et dont la sortie est connectée au sous-système (3).

20. Système selon l'une quelconque des revendications 18 ou 19, **caractérisé en ce que** le système présente une horloge fournissant un même signal d'horloge au processeur central (2) et au sous-système (3).

21. Système selon la revendication 20, **caractérisé en ce que** le processeur central (2) et le sous-système (3) disposent chacun d'un organe de détermination d'un temps système en fonction des signaux d'horloge.

22. Système selon la revendication 21, **caractérisé en ce que** le sous-système (3) comprend un module temporel de comparaison du temps système et de l'instant d'exécution d'un message, susceptible de générer ladite requête en cas d'égalité entre le temps système et l'instant d'exécution.

23. Système selon l'une quelconque des revendications 18 à 22, **caractérisé en ce que** le sous-système (3) présente une entrée de réception d'évènements extérieurs autres que des signaux d'horloge.

24. Système selon la revendication 23, **caractérisé en ce que** le sous-système est susceptible de synchroniser le traitement d'au moins un message avec un événement extérieur reçu.

25. Système selon l'une quelconque des revendications 18 à 24, **caractérisé en ce que** le compteur (5) comprend le nombre de messages d'une tâche stockés dans la mémoire.

## Claims

1. Method of processing different concurrent tasks by a subsystem (3) managed by a central processor (2), the tasks being comprised of successive messages including a first message (M0), intermediate messages (M1) and a last message (M2), each intermediate message comprising at least one subtask parameter and a link to the next message indicating the moment of processing the next message, the central processor (2) and the subsystem (3) being connected to a plurality of counters associated to respective tasks and to a storage memory (4), the method comprising the steps of:
- for each task,
- a sub-step of writing by the central processor (2), comprising:
- writing a message in the memory (4); then
- if the counter (5) is initially free for access, prohibiting access to the associated counter by the subsystem; then
- if the counter has a zero value, the central processor writes in the subsystem a link indicating the moment of processing of the first message by the subsystem;
- otherwise, writing in the subsystem the link to the next message, this link being included in the message written in the memory;
- then incrementation of the counter (5) by the central processor by a number representative of the presence of a message of said task in the memory; then
- ending the prohibition to access the counter;
- a sub step of processing by the subsystem, comprising:
- if the counter is initially free for access, prohibiting access to the associated counter by the central processor; then
- if the counter has a non zero value, the subsystem reads the link to the next message previously written and decrements the associated counter; then
- ending the prohibition to access the associated counter; then
- the subsystem processes the subtask parameters of the next message at the moment indicated in that link.

2. Method according to claim 1, **characterised in that** the link to the next message also indicates the length of the next message.

3. Method according to claim 1 or 2, **characterised in that** the messages of a task are arranged sequentially in the memory (4).

4. Method according to claim 3, **characterised in that** the link to the next message does not comprise the address of the next message in the memory.

5. Method according to any one of claims 1 to 3 **characterised in that** the link to the next message also indicates the address of the next message in the memory (4).

6. Method according to claim 5, **characterised in that** prior to the step of writing a message in the memory (4), the central processor (2) consults the list of available addresses in the memory, determines an address where to store the message in the memory and writes the address of the message in the link of the preceding message.

7. Method according to any one of the preceding claims, **characterised in that** the link to the next message also indicates the type of the next message.

8. Method according to claim 7, **characterised in that** at least one link of one of said messages indicates an immediate processing of the next message, and **in that** the method further comprises a step of immediately processing the next message.

9. Method according to claim 8, **characterised in that** at least one link to the next message indicates a processing conditioned by an external event, and **in that** the method further comprises the steps of:
- receiving by the subsystem a signal representative of an external event; then
- processing the next message by the subsystem.

10. Method according to claim 9, **characterised in that** the signal is a video synchronisation signal.

11. Method according to any one of the preceding claims, **characterised in that** the link to the next message indicates the moment of processing the next message by a relative time interval separating the processing of the next message and that of the message comprising the link.

12. Method according to any one of the preceding claims, **characterised in that** the first message of a task does not contain subtask parameters.

13. Method according to the preceding claim, **characterised in that** the last message comprises a link indicating the end of the task.

14. Method according to claim 13, **characterised in that** the indication of the moment of processing the next message in the link of the last message comprises a zero value.

15. Method according to any one of the preceding claims, **characterised in that**:
- the subsystem (3) executes video processing tasks comprising the management of image acquisition, the management of image display and image encoding/decoding;
- when several links indicate a same moment of execution for several respective messages, the subsystem gives priority to processing the subtask parameters of an image acquisition management message, then to the subtask parameters of an image display message, then to the subtask parameters of an image encoding/decoding message.

16. Method according to any one of the preceding claims, **characterised in that** the subsystem (3) and the central processor (2) take as input a common clock signal and determine their respective system times on the basis of that clock signal.

17. Method according to claim 16, **characterised in that** the processing of the parameters of a message is performed when the system time of the subsystem is equal to the moment indicated for the processing of the message.

18. Electronic system for executing concurrent tasks (1), comprising:
- a storage memory (4);
- a central processor (2), capable of generating and writing successive messages (M0-M2) constituting a plurality of concurrent tasks in the storage memory, each task being comprised of a first message (M0), a plurality of intermediate messages (M1) and a last message (M2), each written intermediate message comprising at least one subtask parameter (P1) and a link to the next message (L1),
- a subsystem (3) capable of reading the messages written in the storage memory, and comprising command means requesting the processing of a message at the moment specified in the link of the preceding message, and processing means for processing the message at said moment in response to the request;
- a plurality of counters (5), each counter being associated to one of the tasks, capable of being incremented by the central processor (2) and capable of being decremented by the subsystem (3);
- semaphores (6), each semaphore authorising an access by the central processor to a counter associated to that semaphore only in the absence of an access by the subsystem to said counter, and authorising an access by the subsystem to said associated counter only in the absence of an access by the central processor to said counter.

19. System according to claim 18, **characterised in that** the memory comprises at least a plurality of FIFO type parallel storage lines, whose inputs are connected to the central processor (2) and whose outputs are connected to the subsystem (3).

20. System according to any one of claims 18 or 19, **characterised in that** the system has a clock supplying a same clock signal to the central processor (2) and to the subsystem (3).

21. System according to claim 20, **characterised in that** the central processor (2) and the subsystem (3) each have means for determining a system time as a function of the clock signals.

22. System according to claim 21, **characterised in that** the subsystem (3) comprises a time module for comparing the system time and the moment of execution of a message, capable of generating said request upon an equality between the system time and the moment of execution.

23. System according to any one of claims 18 to 22, **characterised in that** the subsystem (3) has an input for receiving external events other than clock signals.

24. System according to claim 23, **characterised in that** the subsystem is capable of synchronising the processing of at least one message with a received external event.

25. System according to any one of claims 18 to 24, **characterised in that** the counter (5) comprises the number of messages of a task stored in the memory.

## Patentansprüche

1. Verfahren zur Verarbeitung von verschiedenen konkurrierenden Aufgaben durch ein von einem Zentralprozessor (2) verwaltetes Subsystem (3), wobei die Aufgaben durch aufeinanderfolgende Nachrichten gebildet sind, die eine erste Nachricht (M0), Zwischennachrichten (M1) und eine letzte Nachricht (M2) einschließen, wobei jede Zwischennachricht zumindest einen Unteraufgaben-Parameter und einen Link zur nachfolgenden Nachricht umfasst, der den Zeitpunkt der Verarbeitung der nachfolgenden Nachricht angibt, wobei der Zentralprozessor (2) und das Subsystem (3) mit mehreren, den jeweiligen Aufgaben zugeordneten Zählern und mit einem Speicher (4) verbunden sind, wobei das Verfahren die folgenden Schritte umfasst:
- für jede Aufgabe
- einen Unterschritt des Schreibens durch den Zentralprozessor (2), umfassend:
- das Schreiben einer Nachricht in den Speicher (4); dann,
- wenn der Zähler (5) anfänglich frei zugreifbar ist, das Sperren des Zugriffs auf den zugeordneten Speicher durch das Subsystem; dann,
- wenn der Zähler einen Wert gleich Null zeigt, schreibt der Zentralprozessor in das Subsystem einen Link, der den Zeitpunkt der Verarbeitung der ersten Nachricht durch das Subsystem angibt;
- anderenfalls das Schreiben des Links zur nachfolgenden Nachricht, der in der in den Speicher geschriebenen Nachricht enthalten ist, in das Subsystem;
- dann das Inkrementieren des Zählers (5) durch den Zentralprozessor um eine Zahl, die repräsentativ ist für das Vorliegen einer Nachricht der Aufgabe in dem Speicher; dann
- das Aufheben der Zugriffssperre auf den Zähler;
- einen Unterschritt der Verarbeitung durch das Subsystem, umfassend:
- wenn der Zähler anfänglich frei zugreifbar ist, das Sperren des Zugriffs auf den zugeordneten Zähler durch den Zentralprozessor; dann,
- wenn der Zähler einen Wert aufweist, der nicht Null ist, liest das Subsystem den Link zur nachfolgenden Nachricht, der vorher eingeschrieben wurde, und dekrementiert den zugeordneten Zähler; dann
- das Aufheben der Zugriffssperre auf den zugeordneten Zähler ; dann
- verarbeitet das Subsystem die Unteraufgaben-Parameter der nachfolgenden Nachricht zu dem in dem Link angegebenen Zeitpunkt.

2. Verfahren nach Anspruch 1, **dadurch gekennzeichnet, dass** der Link zu der nachfolgenden Nachricht auch die Länge der nachfolgenden Nachricht angibt.

3. Verfahren nach Anspruch 1 oder 2, **dadurch gekennzeichnet, dass** die Nachrichten einer Aufgabe sequenziell in dem Speicher (4) abgelegt werden.

4. Verfahren nach Anspruch 3, **dadurch gekennzeichnet, dass** der Link zur nachfolgenden Nachricht die Adresse der nachfolgenden Nachricht in dem Speicher nicht enthält.

5. Verfahren nach einem der Ansprüche 1 bis 3, **dadurch gekennzeichnet, dass** der Link zu der nachfolgenden Nachricht auch die Adresse der nachfolgenden Nachricht in dem Speicher (4) enthält.

6. Verfahren nach Anspruch 5, **dadurch gekennzeichnet, dass** vor dem Schritt des Schreibens einer Nachricht in den Speicher (4) der Zentralprozessor (2) eine Liste von in dem Speicher verfügbaren Adressen abruft, eine Adresse bestimmt, unter der die Nachricht in dem Speicher abzulegen ist, und die Adresse der Nachricht in den Link der vorhergehenden Nachricht schreibt.

7. Verfahren nach einem der vorhergehenden Ansprüche, **dadurch gekennzeichnet, dass** der Link zu der nachfolgenden Nachricht auch die Art der nachfolgenden Nachricht angibt.

8. Verfahren nach Anspruch 7, **dadurch gekennzeichnet, dass** zumindest ein Link von einer dieser Nachrichten eine unmittelbare Verarbeitung der nachfolgenden Nachricht angibt und dass das Verfahren außerdem einen Schritt der unmittelbaren Verarbeitung der nachfolgenden Nachricht umfasst.

9. Verfahren nach Anspruch 8, **dadurch gekennzeichnet, dass** zumindest ein Link zu der nachfolgenden Nachricht eine durch ein externes Ereignis bedingte Verarbeitung angibt und dass das Verfahren außerdem die folgenden Schritte umfasst:
- Empfangen eines für ein externes Signal repräsentativen Signals durch das Subsystem; dann
- Verarbeiten der nachfolgenden Nachricht durch das Subsystem.

10. Verfahren nach Anspruch 9, **dadurch gekennzeichnet, dass** das Signal ein Video-Synchronisationssignal ist.

11. Verfahren nach einem der vorhergehenden Ansprüche, **dadurch gekennzeichnet, dass** der Link zu der nachfolgenden Nachricht den Zeitpunkt der Verarbeitung der nachfolgenden Nachricht durch einen relativen Zeitraum angibt, der die Verarbeitung der nachfolgenden Nachricht und die der Nachricht, die den Link enthält, voneinander trennt.

12. Verfahren nach einem der vorhergehenden Ansprüche, **dadurch gekennzeichnet**, das die erste Nachricht einer Aufgabe keinen Unteraufgaben-Parameter der enthält.

13. Verfahren nach einem der vorhergehenden Ansprüche, **dadurch gekennzeichnet, dass** die letzte Nachricht einen Link enthält, der das Ende der Aufgabe angibt.

14. Verfahren nach Anspruch 13, **dadurch gekennzeichnet, dass** die Angabe des Zeitpunkts der Verarbeitung der nachfolgenden Nachricht in dem Link der letzten Nachricht einen Wert Null aufweist.

15. Verfahren nach einem der vorhergehenden Ansprüche, **dadurch gekennzeichnet, dass**
- das Subsystem (3) Video-Verarbeitungsaufgaben durchführt, umfassend die Verwaltung der Bilderfassung, die Verwaltung der Bildanzeige und die Codierung/Decodierung von Bildern;
- das Subsystem, wenn mehrere Links den gleichen Ausführungszeitpunkt für jeweils mehrere Nachrichten angeben, vorrangig die Unteraufgaben-Parameter einer Nachricht der Verwaltung der Bilderfassung, dann die Unteraufgaben-Parameter der Nachricht einer Bildanzeige, dann die Unteraufgaben-Parameter einer Nachricht der Codierung/Decodierung von Bildern verarbeitet.

16. Verfahren nach einem der vorhergehenden Ansprüche, **dadurch gekennzeichnet, dass** das Subsystem (3) und der Zentralprozessor (2) ein gemeinsames Taktsignal empfangen und ihre jeweilige Systemzeit ausgehend von diesem Taktsignal bestimmen.

17. Verfahren nach Anspruch 16, **dadurch gekennzeichnet**, das die Verarbeitung der Parameter einer Nachricht erfolgt, wenn die Systemzeit des Subsystems gleich dem Zeitpunkt ist, der für die Verarbeitung der Nachricht angegeben ist.

18. Elektronisches System (1) zur Ausführung von konkurrierenden Aufgaben, umfassend:
- einen Speicher (4);
- einen Zentralprozessor (2), der geeignet ist, aufeinanderfolgende Nachrichten (MO-M2), die mehrere konkurrierende Aufgaben bilden, zu generieren und in den Speicher zu schreiben, wobei jede Aufgabe durch eine erste Nachricht (M0), mehrere Zwischennachrichten (M1) und eine letzte Nachricht (M2) gebildet ist, wobei jede eingeschriebene Zwischennachricht mindestens einen Unteraufgaben-Parameter (P1) und einen Link (L1) zu der nachfolgenden Nachricht enthält,
- ein Subsystem (3), das geeignet ist, die in den Speicher geschriebenen Nachrichten zu lesen, und das ein Befehlsorgan umfasst, das die Verarbeitung einer Nachricht zu dem in dem Link der vorhergehenden Nachricht genannten Zeitpunkt anfordert, und ein Verarbeitungsorgan, das die Nachricht in Reaktion auf die Anforderung zu dem genannten Zeitpunkt verarbeitet;
- mehrere Zähler (5), deren jeder einer der Aufgaben zugeordnet ist, wobei die Zähler geeignet sind für eine Inkrementierung durch den Zentralprozessor (2) und für eine Dekrementierung durch das Subsystem (3);
- Semaphore (6), deren jedes einen Zugriff des Zentralprozessors auf einen diesem Semaphor zugeordneten Zähler nur bei fehlendem Zugriff des Subsystems auf diesen Zähler zulässt und einen Zugriff des Subsystems auf diesen zugeordneten Zähler nur bei fehlendem Zugriff des Zentralprozessors auf diesen Zähler zulässt.

19. System nach Anspruch 18, **dadurch gekennzeichnet, dass** der Speicher zumindest mehrere parallele Speicherleitungen des FIFO-Typs umfasst, wovon der Eingang mit dem Zentralprozessor (2) und der Ausgang mit dem Subsystem (3) verbunden ist.

20. System nach einem der Ansprüche 18 oder 19, **dadurch gekennzeichnet, dass** das System einen Taktgeber aufweist, der das gleiche Taktsignal an den Zentralprozessor (2) und an das Subsystem (3) liefert.

21. System nach Anspruch 20, **dadurch gekennzeichnet, dass** der Zentralprozessor (2) und das Subsystem (3) jeweils über ein Organ zur Bestimmung einer Systemzeit abhängig von den Taktsignalen verfügen.

22. System nach Anspruch 21, **dadurch gekennzeichnet, dass** das Subsystem (3) ein Zeitmodul für den Vergleich der Systemzeit und des Zeitpunkts der Ausführung einer Nachricht umfasst, das geeignet ist, im Falle einer Gleichheit zwischen der Systemzeit und dem Ausführungszeitpunkt die Anforderung zu generieren.

23. System nach einem der Ansprüche 18 bis 22, **dadurch gekennzeichnet, dass** das Subsystem außer für den Empfang von Taktsignalen einen Eingang für den Empfang von externen Ereignissen aufweist.

24. System nach Anspruch 23, **dadurch gekennzeichnet, dass** das Subsystem geeignet ist, zumindest eine Nachricht mit einem empfangenen externen Ereignis zu synchronisieren.

25. System nach einem der Ansprüche 18 bis 24, **dadurch gekennzeichnet, dass** der Zähler (5) die Anzahl von in dem Speicher gespeicherten Nachrichten einer Aufgabe enthält.
